## Europäisches Patentamt

## European Patent Office

(11) Veröffentlichungsnummer: **0 022 055**
**B1**

## Office européen des brevets

(19)

(12) **EUROPÄISCHE PATENTSCHRIFT**

(45) Veröffentlichungstag der Patentschrift:
02.03.83

(51) Int. Cl.³: **E 01 C 11/24**, E 01 H 10/00

(21) Anmeldenummer: **80730041.3**

(22) Anmeldetag: **06.06.80**

(54) **Deckschicht einer Strasse, die einen Zuschlagstoff enthält, und Verfahren zur Herstellung dieses Zuschlagstoffes.**

(30) Priorität: 11.06.79 **DE 2923939**
24.10.79 **DE 2943447**
16.11.79 **DE 2946823**

(73) Patentinhaber: **Mannesmann AG, Mannesmannufer 2, D-4000 Düsseldorf 1 (DE)**

(43) Veröffentlichungstag der Anmeldung:
**07.01.81 Patentblatt 81/1**

(72) Erfinder: **Werner, Siegmund, Nietzschestrasse 4, D-6800 Mannheim (DE)**

(45) Bekanntmachung des Hinweises auf die Patenterteilung:
**02.03.83 Patentblatt 83/9**

(74) Vertreter: **Meissner, Peter E., Dipl.-Ing. et al, Patentanwälte Dipl.-Ing. Walter Meissner Dipl.-Ing. Peter E. Meissner Dipl.-Ing. Hans-Joachim Presting HerLertstrasse 22, D-1000 Berlin 33 (DE)**

(84) Benannte Vertragsstaaten:
**AT BE CH DE FR GB IT LI LU NL SE**

(56) Entgegenhaltungen:
**DE-A-2 426 200**
**DE-A-2 512 691**
**DE-B-2 306 145**
**DE-B-2 559 478**
**DE-C-1 805 829**
**GB-A-1 057 412**

## Deckschicht einer Straße, die einen Zuschlagstoff enthält, und Verfahren zur Herstellung dieses Zuschlagstoffes

Die Erfindung betrifft eine Deckschicht einer Straße, die einen Zuschlagstoff, bestehend aus einer anorganischen, porigen Basiskomponente mit einem eingelagerten frosthemmenden Mittel und einer organischen Ergänzungskomponente ebenfalls mit einem frosthemmenden Mittel, enthält, wobei mindestens eine der Komponenten durch angelagerte silizium-organische Verbindungen hydrophobiert ist.

Die Erfindung geht von einem nach der DE-A-2 512 691 bekannten Stand der Technik aus, nämlich einer Deckschicht, bei der zumindest ein Teil des gesamten Zuschlagstoffes aus Hohlräume aufweisendem Material besteht und das frosthemmende Zusatzmittel, beispielsweise Natriumchlorid, in diese Hohlräume eingelagert ist. Dabei bewirkt das eingelagerte frosthemmende Zusatzmittel beim Freisetzen desselben durch den Verschleiß der Straßendecke eine Gefrierpunktabsenkung des Oberflächenwassers und verhindert damit eine vorzeitige Vereisung der Straße.

Weiterhin ist es durch die DE-A-2 426 200 bekannt, umhüllte Teilchen eines frosthemmenden Mittels in eine Deckschicht einzulagern und dabei ein Gemisch aus einer ersten Gruppe von Teilchen aus Kalziumchlorid und einer zweiten Gruppe von Teilchen aus Natriumhydroxid zu verwenden. Durch das Mischungsverhältnis dieser beiden Teilchengruppen lassen sich die Eigenschaften der frosthemmenden Deckschicht auf Umweltbedingungen abstimmen.

Aufgabe der Erfindung ist es, die Basis für die Herstellung einer frosthemmenden Deckschicht durch einen wirtschaftlich herstellbaren und gut zu verarbeitenden frosthemmenden Zuschlagstoff zu erweitern, wobei insbesondere den Erfordernissen beim Herstellen einer bitumengebundenen Straßendecke entsprochen werden soll.

Gelöst wird diese Aufgabe erfindungsgemäß dadurch, daß

a) als Bindemittel für die frosthemmenden Zuschlagstoffe Bitumen oder Asphalt vorgesehen ist, daß
b) als frosthemmendes Mittel in der organischen Substanz Kalziumchlorid eingelagert ist und daß
c) die Korngröße der Basiskomponente unter 0,1 mm, die der Ergänzungskomponente unter 1 mm liegt und das Einzelkorn der anorganischen Basiskomponente bzw. der organischen Ergänzungskomponente jeweils wenigstens 30% Porenvolumen aufweist.

Auf vorteilhafte Weiterentwicklungen und Anwendungen der Erfindung gemäß den Unteransprüchen wird verwiesen.

Durch die Erfindung wird eine Trennung in der Herstellung des frosthemmenden Zuschlagstoffes dadurch erreicht, daß der natriumchloridhaltige Zuschlagstoff getrennt vom kalziumchloridhaltigen Zuschlagstoff hergestellt werden kann. Dies ist insofern von Bedeutung als Kalziumchlorid sehr hygroskopisch ist, worauf die Verarbeitungsbedingungen eingestellt werden müssen. So kann auch die kalziumchloridhaltige Ergänzungskomponente separat in entsprechenden Behältern gelagert werden, während die natriumchloridhaltige Basiskomponente weniger Aufwand erfordert.

Besonders hervorzuheben ist die Maßnahme gemäß Merkmal C deswegen, weil sie es ermöglicht, dem frosthemmenden Zuschlagstoff zusätzlich Aufgaben zu übertragen, die sonst vom sogenannten Füller in einer bitumengebundenen Decke übernommen werden. Ein Füller hat u. a. die Aufgabe, Hohlräume zwischen dem Hauptzuschlagstoff wie Basaltsplitt oder dergleichen teilweise auszufüllen, vor allem jedoch soll er das temperaturabhängige Zähigkeitsverhalten der Deckschicht auch bei der Herstellung derselben beeinflussen. Der frosthemmende Zuschlagstoff vermag also den Füller oder einen Teil desselben zu ersetzen, ohne daß, wie Versuche gezeigt haben, eine Beeinträchtigung der Festigkeitseigenschaften zu befürchten ist. Die Ergänzungskomponente kann deswegen etwas gröber sein als die Basiskomponente, weil diese bei der Verarbeitung selbst noch eine gewisse Verminderung der Korngröße erfährt. Beim Herstellen der Endmischung einer Deckschicht wird bekanntlich in der Wärme gearbeitet.

Die dort auftretenden Temperaturen, die Bitumen, Asphalt oder Teerasphalt in einem flüssigen Zustand halten, bewirken ein verkoken der organischen Substanz, so daß dann das Kalziumchlorid in ein Koksgitter eingebettet und in inniger Verbindung mit umgebendem Bitumen ist. Damit wird die Diffusion von Feuchtigkeit zu den kalziumchloridhaltigen Einzelkörnern stark eingeschränkt, so daß keine besonderen Maßnahmen erforderlich sind, um diese vor einer vorzeitigen Freigabe an die Umgebung zu schützen. Es liegt aber immer Kalziumchlorid so dicht an der Oberfläche der Fahrbahndecke, daß es seine hygroskopische Wirkung entfalten kann, um in Verbindung mit dem Natriumchlorid der Basiskomponente eine Gefrierpunktabsenkung zu bewirken. Durch den Verschleiß der Fahrbahndecke allmählich freigesetzte Einzelkörner der Basiskomponente wirken dabei als mechanisches Aufschlußmittel, so daß auf ein zusätzliches Sanden der Straße während des Winters weitgehend verzichtet werden kann.

Es wäre ergänzend anzuführen, daß die Anwesenheit von Polyurethanschaummehl sich im übrigen auch dadurch vorteilhaft auswirkt, daß die Verarbeitbarkeit des Straßendeckenmörtels verbessert wird und die Straßendecke selbst bei großer Härte weniger spröde ist.

Weiterhin schlägt der Patentanspruch 2 vor, die Basiskomponente unter Verwendung des bei der Bauxitaufbereitung anfallenden Bauxitrückstandes herzustellen. Bauxitrückstände, die als sogenannter Rotschlamm anfallen, sind an sich ein Abfallprodukt, die einer durch die DE-C-1 805 829 bekannten besonderen Behandlung bedürfen, um als Füller für den Straßenbau Verwendung finden zu können. Zusätzlich ist ein durch die DE-B-2 306 145 bekanntes besonderes Trocknungsverfahren erforderlich, um die Rieselfähigkeit dieses Füllers, der sehr stark staubt, sicherzustellen. Durch Besprühen dieses, als Rotfüller bekannten Füllers mit Wasser kann der Staubentwicklung nicht entgegengewirkt werden, da er aufgrund seines hohen Porenvolumens und wegen seines relativ hohen Anteils an wasserlöslichem Alkali Wasser begierig aufnimmt und durch die Aufnahme von Wasser seine Rieselfähigkeit und Dosierbarkeit wieder verliert und außerdem so unzulässig viel Wasser in die Straßendecke einbringen würde. Das hohe Porenvolumen dieses bekannten Füllers erfordert naturgemäß einen erhöhten Aufwand an Bitumen, der durch die vorliegende Erfindung, bei dem die Poren der Bauxitrückstände mit Salz gefüllt sind, vermieden wird. Außerdem macht die Hydrophobierung durch die angelagerten silizium-organischen Verbindungen den Füller abweisend und stellt insbesondere durch die Maßnahme des Patentanspruches 3, nämlich die Anlagerung höherer Kohlenwasserstoffe, seine Rieselfähigkeit sicher, unterdrückt aber gleichzeitig die Neigung zur Staubentwicklung.

Durch das Einlagern von Salz in die einzelnen Körner des Bauxitrückstandes ist darüber hinaus ein frosthemmender Zuschlagstoff geschaffen worden, der ein wesentlich höheres Schüttgewicht hat als der bekannte Rotfüller und damit auch aus dieser Sicht besser verarbeitet werden kann.

Eine bevorzugte Zusammensetzung der Basiskomponente ist im Patentanspruch 4 niedergelegt. Sie hat folgende Zusammensetzung:

| | |
|---|---|
| 10 Gewichtsteile | Bauxitrückstand |
| 1 Gewichtsteil | Quarzmehl |
| 30 Gewichtsteile | Natriumchlorid |
| 0,5 Gewichtsteile | silizium-organische Verbindungen |
| 1 Gewichtsteil | Dieselöl |

Hervorstechend dabei ist der außerordentlich hohe Salzgehalt. Es war im übrigen sehr überraschend, daß sich gerade bei Anwesenheit silizium-organischer Verbindungen die Hohlräume des Bauxitrückstandes in einem derart hohen Maß mit Salz sättigen lassen.

Bei der Zusatzkomponente kann bis auf den Zusatz von Dieselöl, der hier nicht erforderlich ist, mit den gleichen Mengenverhältnissen gearbeitet werden, wobei Bauxitrückstand durch Polyurethanschaummehl zu ersetzen ist.

Der Patentanspruch 5 soll nicht aussagen, daß die beiden Komponenten nach ihrer Herstellung miteinander zu vermischen sind, sondern daß sie zur Herstellung der Straßendecke in den angegebenen Mengenverhältnissen zu verwenden sind.

Im nachfolgenden wird nun der gesamte Verfahrensablauf vom Herstellen der frosthemmenden Zuschlagstoffe bis zur Erstellung der Straßendecke beschrieben.

Zur Herstellung der Basiskomponente wird bei der Aufbereitung von Bauxit dort als Filterkuchen anfallender Rotschlamm, der einen Wassergehalt von etwa 50% hat, mit Natriumchlorid vermischt. Das Natriumchlorid wird portionsweise nach und nach zugegeben, wobei spätestens beim letzten Mischvorgang die silizium-organische Verbindung, beispielsweise als wäßrige Lösung zugesetzt wird. Sofern auch Quarzmehl beigemischt wird, wird dieses zweckmäßigerweise vor dem ersten Mischvorgang mit Salz zugegeben.

Für die vorgesehene Hydrophobierung, die auch eine mechanische Stabilisierung der kalziumchloridhaltigen Ergänzungskomponente bringt, lassen sich beispielsweise auch handelsübliche Fassadenimprägnierungen verwenden, deren Wirkung durch die Zugabe von geringen Mengen an Quarzmehl verbessert werden kann.

Der nun aus Rotschlamm hergestellte salzhaltige Brei wird getrocknet, gemahlen und dann mit Dieselöl besprüht. Man kann auch die zusammengebackene trockene Mischung in Dieselöl tauchen, abtropfen lassen, um sie anschließend zu mahlen.

Zur Herstellung der Ergänzungskomponente wird Polyurethanschaummehl, Kalziumchlorid mit Wasser bei Anwesenheit silizium-organischer Verbindungen vermischt, getrocknet und schließlich ebenfalls gemahlen.

Nun wird der frosthemmende Zuschlagstoff, nämlich die Basiskomponente und die Ergänzungskomponente zusammen mit dem Hauptzuschlagstoff in einer Bituminieranlage bituminiert oder mit Asphalt vermengt, so daß eine Mischung erzeugt wird, die unmittelbar zum Auftragen als Deckschicht einer Straße geeignet ist.

Abschließend sei ein weiteres Beispiel zur Herstellung von etwa 1 kg der Basiskomponente angeführt. Dabei wurden verwendet.

| | |
|---|---|
| 600 g | feinkörniges Natriumchlorid |
| 200 g | Wasser |
| 40 g | hydrophobierende Siliziumverbindung I |

3

    60 g  Quarzmehl
  200 g  Bauxitrückstände
    40 g  hydrophobierende Siliziumverbindung II
etwa 100 g  Dieselöl

Die hier trockenen Bauxitrückstände wurden mit dem Wasser vermischt und so wieder ein Rotschlamm erzeugt. Diesem wurde das feinkörnige Natriumchlorid und die hydrophobierende Siliziumverbindung I zugesetzt. Anschließend erfolgt die Zugabe des Quarzmehls, um schließlich die hydrophobierende Siliziumverbindung II zuzusetzen. Bei den hydrophobierenden Siliziumverbindungen I und II handelte es sich wiederum um handelsübliche Fassadenimprägnierungen, wobei die wäßrige Lösung I einen pH-Wert von ca. 12,4 und eine Dichte von 1,1 g/cm³, die wäßrige Lösung II einen pH-Wert von 11,8 und eine Dichte von 1,17 g/cm³ hatte. Der Feststoffgehalt dieser wäßrigen Lösungen I und II lag über 20%.

## Patentansprüche

1. Deckschicht einer Straße, die einen Zuschlagstoff, bestehend aus einer anorganischen, porigen Basiskomponente mit einem eingelagerten frosthemmenden Mittel und einer organischen Ergänzungskomponente ebenfalls mit einem frosthemmenden Mittel, enthält, wobei mindestens eine der Komponenten durch angelagerte silizium-organische Verbindungen hydrophobiert ist, dadurch gekennzeichnet, daß

a)   als Bindemittel für die frosthemmenden Zuschlagstoffe Bitumen oder Asphalt vorgesehen ist, daß
b)   als frosthemmendes Mittel in der organischen Substanz Kalziumchlorid eingelagert ist und daß
c)   die Korngröße der Basiskomponente unter 0,1 mm, die der Ergänzungskomponente unter 1 mm liegt und das Einzelkorn der anorganischen Basiskomponente bzw. der organischen Ergänzungskomponente jeweils wenigstens 30% Porenvolumen aufweist.

2. Deckschicht nach Anspruch 1, dadurch gekennzeichnet, daß bei der Basiskomponente wesentlicher Bestandteil des Einzelkornes aus bei der Bauxitaufbereitung anfallender Bauxitrückstand, nämlich ein feindisperses Mineralgemisch aus Natriumaluminiumsilikat, Aluminium- und Titanoxiden ist und daß bei der Ergänzungskomponente wesentlicher Bestandteil des Einzelkornes Polyurethanschaummehl ist.

3. Deckschicht nach den Ansprüchen 1 und 2, dadurch gekennzeichnet, daß an das Einzelkorn der Basiskomponente höhere Kohlenwasserstoffe angelagert sind.

4. Deckschicht nach Anspruch 3, gekennzeichnet durch etwa folgende Zusammensetzung der Basiskomponente

  10 Gewichtsteile   Bauxitrückstand
    1 Gewichtsteil    Quarzmehl
  30 Gewichtsteile   Natrium
  0,5 Gewichtsteile silizium-organische Verbindungen
    1 Gewichtsteil    Dieselöl

5. Deckschicht nach den Ansprüchen 1 bis 3, gekennzeichnet durch ein Mischungsverhältnis der Basiskomponente zur Ergänzungskomponente von 10 zu 0,3 bis 10 zu 3.

6. Verfahren zur Herstellung des Zuschlagstoffes für die Deckschicht nach einem der Ansprüche 1 bis 5, wobei Mischungen hergestellt werden, von denen die eine die anorganische Substanz und ein Salz und die andere die organische Substanz und ein Salz enthält, dadurch gekennzeichnet, daß die ein wenigstens 30% Porenvolumen aufweisende anorganische Substanz mit Wasser und Natriumchlorid und ein wenigstens 30% Porenvolumen aufweisender geschäumter Kunststoff mit Wasser und Kalziumchlorid vermischt werden, daß das Herstellen der Mischungen bei Anwesenheit silizium-organischer Verbindungen erfolgt, die Mischungen anschließend getrocknet werden und die getrockneten Mischungen schließlich auf eine Korngröße von unter 1 mm, mindestens die natriumchloridhaltige Mischung auf eine Korngröße von unter 0,1 mm zerkleinert werden.

7. Verfahren nach Anspruch 6, dadurch gekennzeichnet, daß zur Herstellung der Basiskomponente von bei der Aufbereitung von Bauxit anfallendem Rotschlamm ausgegangen wird, und dem Rotschlamm das Natriumchlorid und die silizium-organischen Verbindungen zugemischt werden.

8. Verfahren nach Anspruch 7, dadurch gekennzeichnet, daß der Mischvorgang in mehreren Stufen erfolgt und in jeder Mischstufe eine Teilmenge der insgesamt zuzusetzenden Menge an Natriumchlorid und spätestens beim letzten Mischvorgang die silizium-organische Verbindung zugegeben wird.

9. Verfahren nach einem der Ansprüche 6—8, dadurch gekennzeichnet, daß den Komponenten vor der Zugabe der silizium-organischen Verbindungen und des Natriumchlorids bzw. Kalziumchlorids 1 bis 30 Gew.-% Quarzmehl bezogen auf das Trockengewicht der salzfreien Ausgangsstoffe zugesetzt wird.

## Claims

1. Surface layer of a road, which contains an aggregate, consisting of an inorganic, porous base component with an incorporated frost-inhibiting agent and of an organic supplementary component, likewise with a frost-inhibiting agent, whereby at least one of the components is made water-repellent through added silicium-organic compounds, characterized in that

a) bitumen or asphalt is provided as binding agent for the frost-inhibiting aggregates, that
b) calcium chloride is incorporated as frost-inhibiting agent in the organic substance and that
c) the grain size of the base component lies below 0.1 mm, that of the supplementary component below 1 mm and the individual grain of the inorganic base component or of the organic supplementary component in each case has at least 30% volume of voids.

2. Surface layer according to Claim 1, characterized in that in the base component an essential component of the individual grain is of bauxite residue occurring in the preparation of bauxite, namely a finely-dispersed mineral mixture of sodium aluminium silicate, aluminium- and titanium oxides and that in the supplementary component an essential component of the individual grain is polyurethane foam powder.

3. Surface layer according to Claims 1 and 2, characterized in that higher hydrocarbons are added to the individual grain of the base component.

4. Surface layer according to Claim 3, characterized by approximately the following composition of the base component

10 parts by weight bauxite residue
1 parts by weight quartz powder
30 parts by weight sodium
0.5 parts by weight silicium-organic compounds
1 parts by weight diesel oil

5. Surface layer according to Claims 1 to 3, characterized by a proportion of ingredients of the base component to the supplementary component of 10 to 0.3 to 10 to 3.

6. Method for the manufacture of the aggregate for the surface layer according to one of Claims 1 to 5, whereby mixtures are produced, of which one contains the inorganic substance and a salt and the other contains the organic substance and a salt, characterized in that the inorganic substance, having at least a 30% volume of voids, is mixed with water and sodium chloride and a foamed synthetic material, having at least a 30% volume of voids, is mixed with water and calcium chloride, that the manufacture of the mixtures takes place in the presence of silicium-organic compounds, the mixtures are then dried and the dried mixtures are finally reduced to a grain size of below 1 mm, at least the mixture containing sodium chloride to a grain size of below 0.1 mm.

7. Method according to Claim 6, characterized in that to manufacture the base component, one starts from red mud occurring in the preparation of bauxite, and the sodium chloride and the silicium-organic compounds are added to the red mud.

8. Method according to Claim 7, characterized in that the mixing process takes place in several stages and in each mixing stage a partial quantity of the wohle quantity of sodium chloride which is to be added, and at the latest in the final mixing process the silicium-organic compound is added.

9. Method according to one of Claims 6—8, characterized in that before the addition of the silicium-organic compounds and of the sodium chloride or calcium chloride, 1 to 30%-wt. quartz powder in relation for the dry weight of the salt-free initial substances is added to the components.

## Revendications

1. Couche de revêtement d'une route qui contient un agrégat, somposé d'un composant de base inorganique poreux, muni d'un agent antigel incorporé, et d'un composant de complément organique, également muni d'un agent antigel, au moins l'un des composants étant hydrofugé par des composés organo-siliciés fixés, caractérisée en ce que:

a) il est prévu comme liant pour les agrégats antigels, du bitume ou de l'asphalte, que
b) du chlorure de calcium est incorporé dans la substance organique comme agent antigel et que
c) la grosseur de grain du composant de base est au-dessous de 0,1 mm, celle du composant de complément est au-dessous de 1 mm et le grain élémentaire du composant de base inorganique ou du composant de complément organique présente un volume de pores d'au moins 30%.

2. Couche de revêtement suivant la revendication 1, caractérisée en ce que, dans le composant de base, le constituant essentiel du grain élémentaire est un résidu de bauxite obtenu dans la préparation de la bauxite, c'est-à-dire un mélange minéral finement dispersé composé de silicate de sodium-aluminium, d'oxydes d'aluminium et de titane et en ce que, dans le composant de complément, le constituant essentiel du grain élémentaire est une poudre de mousse de polyuréthane.

3. Couche de revêtement suivant les revendications 1 et 2, caractérisée en ce que des hydrocarbures supérieurs sont fixés au grain élémentaire du composant de base.

4. Couche de revêtement suivant la revendication 3, caractérisée par la composition approximative suivante du composant de base:

    10 parties en poids    résidu de bauxite
    1 parties en poids     poudre de quartz
    30 parties en poids    chlorure de sodium
    0,5 parties en poids   Composés organo-siliciés
    1 parties en poids     huile diesel

5. Couche de revêtement suivant les revendications 1 à 3, caractérisée par un rapport de mélange entre le composant de base et le composant de complément compris entre 10 à 0,3 et 10 à 3.

6. Procédé de fabrication de l'agrégat pour une couche de revêtement suivant l'une des revendications 1 à 5, dans lequel on fabrique des mélanges dont l'un contient la substance inorganique et un sel et l'autre la substance organique et un sel, caractérisé en ce qu'on mélange la substance inorganique présentant un volume de pores d'au moins 30% à de l'eau et du chlorure de sodium et la matière plastique en mousse présentant un volume de pores d'au moins 30% à de l'eau et du chlorure de calcium, en ce que la fabrication des mélanges s'effectue en présence de composés organosiliciés, qu'on sèche ensuite les mélanges et que, finalement, on fragmente les mélanges séchés à une grosseur de grain au-dessous de 1 mm, au moins le mélange contenant du chlorure de sodium étant fragmenté à une grosseur de grain au-dessous de 0,1 mm.

7. Procédé suivant la revendication 6, caractérisé en ce que, pour la fabrication du composant de base, on part de boues rouges obtenues lors de la préparation de la bauxite et on mélange à la boue rouge le chlorure de sodium et les composés organo-siliciés.

8. Procédé suivant la revendication 7, caractérisé en ce que l'opération de mélange se produit en plusieurs phases et que, dans chaque phase du mélarnge, on ajoute une quantité partielle de la quantité totale de chlorure de sodium à ajouter et que le composé organo-silicié est ajouté plus tard au moment de la dernière opération de mélange.

9. Procédé suivant l'une des revendications 6 à 8, caractérisé en ce qu'on ajoute aux composants, avant l'addition des composés organo-siliciés et du chlorure de sodium ou du chlorure de calcium, 1 à 30% en poids de poudre de quartz, rapporté au poids sec des des matières de départ non salées.